# EUROPÄISCHE PATENTSCHRIFT

(11) **EP 0 494 728 B1**
(45) Veröffentlichungstag und Bekanntmachung des Hinweises auf die Patenterteilung: **10.04.1996**
(21) Anmeldenummer: 92250008.7
(22) Anmeldetag: 10.01.1992
(51) Int. Cl.: G06F 11/26

(54) **Schaltung zum gesicherten Ein- und/oder Ausgeben binärer Daten**
Circuit for secure input and/or output of binary data
Circuit pour l'entrée et/ou la sortie sécurisées de données binaires

(30) Priorität: 11.01.1991 DE 4100699
(43) Veröffentlichungstag der Anmeldung: 15.07.1992
(73) Patentinhaber: SIEMENS AKTIENGESELLSCHAFT, D-80333 München (DE)
(72) Erfinder: Gronemeyer, Michael, W-3302 Weddel (DE)

(56) Entgegenhaltungen:
- DE-A- 3 503 287

## Beschreibung

Die Erfindung bezieht sich auf eine Schaltung nach dem Oberbegriff des Patentanspruches 1. Eine derartige Schaltung ist aus der DE-PS 32 34 787 bekannt, allerdings nur in Verbindung mit Eingabemoduln.

Bei dieser bekannten Schaltung ist es so, daß eine beliebige Anzahl von Dateneingabemoduln von einem Rechner oder Rechnersystem gleichzeitig einer Prüfung auf ordnungsgerechtes Funktionsverhalten unterzogen werden können. Hierzu sind den Datenempfängern der einzelnen Eingabemoduln Schalter zugeordnet, die vom Rechner bzw. Rechnersystem her gezielt ansteuerbar sind und dabei den jeweils zugehörigen Datenempfänger eingangsseitig kurzschließen. War der Datenempfänger zuvor durchgesteuert, d.h., liegt sein Steuereingang auf H-Potential, so ändert er während des Prüfbetriebes vorübergehend sein Ausgangspotential von H in L; dies wird vom Rechner bzw. Rechnersystem als Zeichen für ordnungsgerechtes Funktionsverhalten des betreffenden Datenempfängers gewertet. Ein Vorteil dieser bekannten Schaltung liegt außer in der Tatsache, daß die Datenempfänger überhaupt einer Funktionsprüfung zu unterziehen sind, darin, daß auf ein entsprechendes Steuersignal hin ein oder gleichzeitig mehrere Datenempfänger überprüfbar sind. Dies erfordert nur einen sehr geringen Software-Aufwand, verlangt aber für jeden Datenempfänger einen gesonderten Schalter zum vorübergehenden Kurzschließen seiner Eingangsklemmen, also einen relativ großen Hardware-Aufwand. Bei umfangreicheren rechnergesteuerten Datenübertragungseinrichtungen ist dieser Aufwand gerechtfertigt, weil es hier darauf ankommt, die Grundlast des oder der Rechner, d.h. die Zeit, die diese "unproduktiv" und mit Prüfvorgängen beschäftigt sind, im Sinne einer möglichst raschen Abarbeitung der Prozeßgeschehen möglichst gering zu halten. Bei kleineren rechnergesteuerten Anlagen, vorzugsweise solchen, die in größerer Stückzahl eingesetzt werden, besteht diese Forderung nicht. Hier wäre es von Vorteil, den Hardware-Aufwand zur Funktionsprüfung der Ein/Ausgabemoduln möglichst gering zu halten, weil die Rechner genügend Zeit haben, auch zeitlich umfangreiche Prüfprozeduren durch zuführen.

Aufgabe der Erfindung ist es, eine Schaltung nach dem Oberbegriff des Patentanspruches 1 anzugeben, die mit einem Minimum an Hardware-Aufwand für die rechnergesteuerte Funktionsprüfung von Ein/Ausgabemoduln auskommt.

Die Erfindung löst diese Aufgabe durch die kennzeichnenden Merkmale des Patentanspruches 1. Die Aufwandsminimierung wird dadurch erreicht, daß es keiner zusätzlichen Schalter zur Funktionsprüfung der Moduln bedarf und daß die Meldungen und Statusmeldungen der Moduln zeitmultiplex abgefragt werden. Die Zuordnung der Statusmeldungen zu den einzelnen Moduln geschieht dadurch, daß die Steuersignale für die Datenempfänger/Datensender der Moduln in das bewertende Rechnersystem zurückgelesen werden. Bei Einhaltung vorgegebener Sicherheitsbauformabstände für die Ein/Ausgabemoduln und ihre Zuleitungen kann damit eine sichere Zuordnung der Meldungen bzw. Statusmeldungen zu den einzelnen Moduln gewährleistet werden.

Eine vorteilhafte, weil besonders aufwandsarme Ausbildung der Ein/Ausgabemoduln ergibt sich aus dem Anspruch 2.
Anspruch 3 bezieht sich auf Maßnahmen zur Impulsformung und Pegelumsetzung der Meldungen und Statusmeldungen in eine für die weitere Datenverarbeitung im Rechner bzw. Rechnersystem erforderliche Weise.
Gemäß Anspruch 4 sollen der oder die zum Eingeben von Meldungen und Statusmeldungen vorgesehenen Schalter potentialtrennend ausgeführt sein, um so unerwünschte Beeinträchtigungen der Rechner bzw. des Rechnersystemes auszuschließen und die Schalter sollen die Meldungen und Statusmeldungen in für den Rechner oder das Rechnersystem geeignete Daten umsetzen.
Anspruch 5 gibt an, wie die Meldungen und die von den Eingabemoduln ausgelösten Statusmeldungen auf den zugehörigen Schalter gelangen.
Der Anspruch 6 benennt die Maßnahmen zur Ausgabe von Kommandos an die zu steuernden Prozeßelemente. Wie die Statusmeldungen der Ausgabemoduln einen Schalter zum Schalten entsprechender Daten an den Rechner oder das Rechnersystem einstellen, ist dem Anspruch 7 zu entnehmen.
Das Einlesen der Daten soll gemäß Anspruch 8 über eine in besonderer Weise ausgestaltete Datenleitung erfolgen, welche das dem Rechner zugeführte Datum unabhängig macht von kurzzeitigen Spannungsänderungen auf den Zuleitungen.
Zum Einlesen der Statusmeldungen sowohl von den Ein- als auch von den Ausgabemoduln sind gemäß Anspruch 9 gesonderte Datenleitungen vorgesehen, über die ein rasches Einlesen dieser Daten möglich ist.

Ein weiterer Prüfbetrieb gemäß Anspruch 10 ermöglicht eine Funktionsprüfung der an der Ausgabe von Kommandos und Prüfsignalen sowie der am Empfang von Meldungen und Statusmeldungen beteiligten Register unabhängig von der Funktionsprüfung der Ein/Ausgabemoduln.

Wenn gemäß Anspruch 11 zur Funktionsprüfung jeweils nur auf diejenigen Ein/Ausgabemoduln eingewirkt wird, die eingangsseitig auf H-Potential liegen, so führt dies durch Aussparen der übrigen Eingabemoduln zu einer Verkürzung der für die Funktionsprüfung insgesamt erforderlichen Prüfzeit.
Gemäß Anspruch 12 ist vorgesehen, die Eingabemoduln während des Prüfvorganges eingangsseitig auf H-Potential zu legen; es sind dann alle Eingabemoduln auf ordnungsgerechtes Funktionsverhalten überprüfbar.

Die Erfindung ist nachstehend anhand eines in der Zeichnung dargestellten Ausführungsbeispieles näher erläutert. Die Zeichnung zeigt:
in Figur 1 den Schaltungsteil zum gesicherten Eingeben von Daten und
in Figur 2 den Schaltungsteil zum gesicherten Ausgeben von Daten.

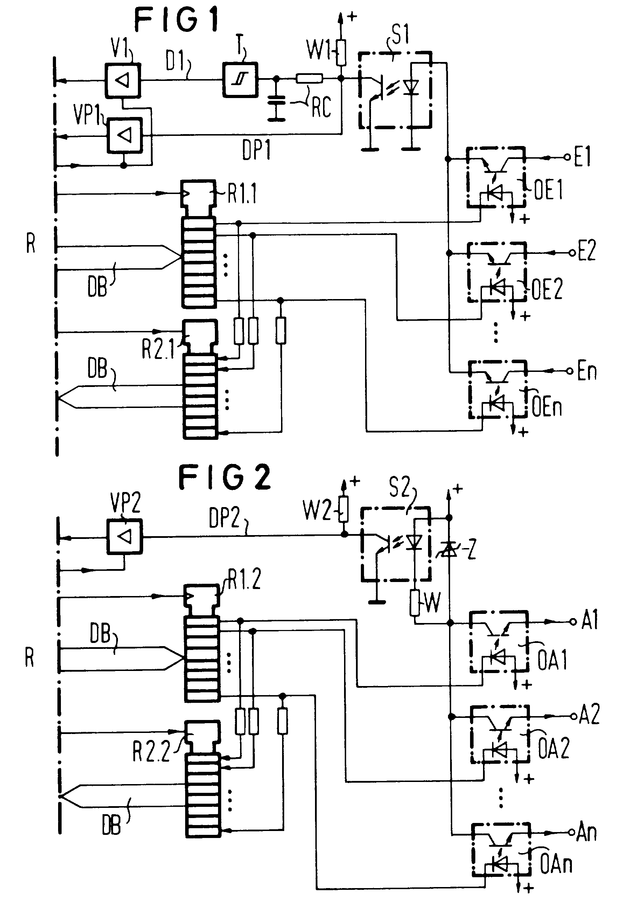

In Figur 1 sind mehrere Eingabemoduln OE1 bis OEn zur Eingabe von Meldungen an einen Rechner oder ein Rechnersystem R dargestellt. An die Eingänge E1 bis En der Eingabemoduln sind nicht dargestellte Prozeßelemente angeschlossen, von denen die einzugebenden Meldungen stammen. Diese Meldungen sind binäre Meldungen, beispielsweise Schalterstellungsmeldungen und werden durch H- und L-Potentiale dargestellt. Sie werden über einen Schalter S1 zur Potentialtrennung und Pegelumsetzung und eine Datenleitung D1 in das Rechnersystem R eingelesen. Hierzu werden die einzelnen Eingabemoduln OEl bis OEn oder ein Teil von ihnen vom Rechnersystem her zeitmultiplex angesteuert und dabei einzeln nacheinander durchgeschaltet. Dies geschieht über ein erstes Register R1.1, das vom Rechnersystem her bedarfsweise einstellbar ist. Dieses Register hat mindestens soviele Registerstufen wie Eingabemoduln vorhanden sind. Die Eingabemoduln sind als Optokoppler ausgebildet.

Im nachfolgenden ist angenommen, daß die erste Registerstufe des Registers R1.1 eingestellt werden soll. Über diese Registerstufe ist das erste Eingabemodul OE1 ansteuerbar. Die Schaltstrecke des Eingabemoduls OE1 ist über den Eingang E1 und eine nicht dargestellte Zuleitung mit einem zugeordneten Prozeßelement und über den Schalter S1 und die Datenleitung D1 mit einem für alle Eingabemoduln gemeinsamen Eingang des Rechnersystemes verbunden. Zum Anschalten des Eingabemoduls OE1 legt das Rechnersystem die erste Registerstufe des Registers R1.1 ausgangsseitig auf L-Potential. Dabei wird die Sendediode des Optokopplers im Eingabemodul aktiviert und steuert den zugehörigen Schalttransistor durch. Das am Eingang E1 des Eingabemoduls OE1 anliegende Potential wird dabei als Meldesignal dem Steuereingang des Schalters S1 zugeführt. Dieser Schalter ist ebenfalls als Optokoppler ausgebildet; sein Eingang wird durch die Sendediode des Optokopplers dargestellt. Liegt der Eingang E1 des Eingabemoduls OE1 während der Ansteuerung durch das erste Register auf H-Potential, so wird die Sendediode des ersten Schalters S1 durchgesteuert. Der Schalttransistor des ersten Schalters zieht dabei das bislang über einen Widerstand W1 am Eingang der Datenleitung D1 anliegende H-Potential auf L. Dieses L-Potential wird dem Eingang des Rechnersystems über ein RC-Glied zum Entprellen der Meldesignale, einen Schmitt-Trigger T zur Impulsformung, eine Datenleitung D1 und einen Eingabeverstärker V1 beim Setzen eines Lesesignals zugeführt.

Wäre das am Eingang E1 des Eingabemoduls anliegende Potential L-Potential gewesen, so wäre die Sendediode des ersten Schalters S1 nicht durchgesteuert worden und am Eingang der Datenleitung wäre das über den Widerstand W1 anliegende H-Potential stehengeblieben und dem Rechnersystem zugeführt worden.

Nach dem Abfragen des Eingabemoduls OE1 und dem Einlesen der über den Eingang E1 anliegenden Meldung in das Rechnersystem veranlaßt dieses die Ansteuerung des folgenden Eingabemoduls OE2 zum Einlesen der am Eingang E2 anliegenden Meldung. Hierzu wird das erste Register R1.1 vom Rechnersystem her um einen Schritt fortgeschaltet. Dabei wird die Sendediode des zweiten Eingabemoduls durchgesteuert und das am Eingang E2 anliegende Datum über den Schalter S1 und die Datenleitung D1 in das Rechnersystem eingelesen. Bei den übrigen Eingabemoduln verhält es sich entsprechend.

Da die einzelnen Eingabemoduln zeitmultiplex angesteuert und die jeweils anliegenden Meldungen nacheinander in das Rechnersystem eingelesen werden, sind die Ausgänge der Eingabemoduln einander parallelgeschaltet und auf einen gemeinsamen Eingang des Rechnersystems geführt. Um nun das dem Rechnersystem jeweils zugeführte Datum einem ganz bestimmten Eingabemodul zuordnen zu können, muß das Rechnersystem Bescheid wissen über das jeweils angesteuerte Eingabemodul. Dies weiß es aus der Ansteuerung des ersten Registers R1.1. Da jedoch auch bei dem Register R1.1 mit Fehlfunktionen zu rechnen ist, genügt die Kenntnis der jeweils angesteuerten Registerstufen allein noch nicht zu einer sicheren Zuordnung des jeweils in das Rechnersystem einzulesenden Datums zu einem Eingabemodul. Das Rechnersystem erkennt das jeweils angeschaltete Eingabemodul über ein dem jeweils ersten Register R1.1 entsprechendes zweites Register R2.1, dessen parallele Eingänge über Entkopplungswiderstände mit den entsprechenden Ausgängen des ersten Registers verbunden sind. Nur dann, wenn z.B. das zum Ansteuern des ersten Eingabemoduls OE1 benötigte L-Signal tatsächlich am Ausgang der ersten Registerstufe des ersten Registers R1.1 und ausschließlich dort abgreifbar ist, anerkennt das Rechnersystem das ihm vom zweiten Register R2.1 über den Datenbus DB des Rechnersystems zugeführte Meldesignal. Ist L-Potential auch an einem der anderen Registerstufen des ersten Registers abgreifbar oder liegt die erste Registerstufe auf H-Potential, so ist dies für das Rechnersystem durch Lesen des zweiten Registers erkennbar. Es weiß dann, daß eine Störung vorliegt und daß die über die Eingänge E1 bis En anliegenden Meldungen nicht mehr bewertet werden dürfen.
Durch konstruktive Maßnahmen ist sicherzustellen, daß zwischen den einzelnen Eingabemoduln und ihren Zuleitungen keinerlei Kopplungen existieren. Nur dann ist sichergestellt, daß ein in das Rechnersystem eingelesenes Datum auch tatsächlich von demjenigen Eingabemodul stammt, das das Rechnersystem durch Lesen des zweiten Registers als vom ersten Register angesteuert erkannt hat.

Zur Funktionsprüfung der Eingabemoduln veranlaßt das Rechnersystem kurzzeitig ein An-, Ab- oder An- und Abschalten der Eingabemoduln. Die dabei von den einzelnen Eingabemoduln ausgelösten Statusmeldungen werden über den Schalter S1 in das Rechnersystem eingelesen und das Rechnersystem prüft, ob die jeweils erwarteten Statusmeldungen ausgegeben werden. Da während des Prüfbetriebes nicht mit Kontaktprellungen zu rechnen ist, bzw. ein gleichzeitiges Umschalten (Prellen) der Eingangssignale per Programm erkannt und die Prüfung nur im eingeschwungenen Zustand fortgesetzt wird, ist nach einer Ausbildung der Erfindung vorgesehen, daß die Statusmeldungen dem Rechnersystem über eine von der Datenleitung D1 unabhängige Prüfdatenleitung DP1 und einen zugehörigen Prüfdatenverstärker VP1 direkt zugeführt werden. Dies hat zur Folge, daß das Rechnersystem unverzüglich über das Funktionsverhalten des jeweils angeschalteten Eingabemoduls unterrichtet ist und nicht die durch das RC-Glied beim Einlesen von Meldungen vorgesehenen Entprell-Zeiten für die Meldungsbewertung berücksichtigen muß. Die Folge hiervon ist, daß die Beaufschlagung der Eingabemoduln im Prüfbetrieb und damit der Prüfbetrieb insgesamt zeitlich sehr begrenzt ist, so daß etwaige Änderungen der Eingangssignale der Eingabemoduln ebenfalls außerordentlich rasch erkannt werden können.

Da nur solche Eingabemoduln auf ordnungsgerechtes Funktionsverhalten prüfbar sind, an deren Eingängen H-Potential anliegt, kann es von Vorteil sein, im Prüfbetrieb nur diejenigen Eingabemoduln anzusteuern, die in einem vorangehenden Meldezyklus ausgangsseitig H-Potential geführt haben. Es ist aber auch möglich, während des Prüfbetriebes alle Eingabemoduln eingangsseitig auf H-Potential zu legen, um so alle Moduln prüfen zu können.

Nach einer weiteren Ausgestaltung der Erfindung ist vorgesehen, die am Einlesen und Prüfen der Eingabemoduln beteiligten beiden Register einer zusätzlichen Funktionsprüfung zu unterziehen, ohne daß es hierfür irgendeines weiteren Hardware-Aufwandes bedarf. Hierzu ist das Rechnersystem so ausgebildet, daß es jede beliebige Bitkombination am Register R1.1 einstellen und die tatsächliche Einstellung dieses Registers über das zweite Register R2.1 überprüfen kann. Durch zyklisches Testen aller möglicher Bitkombinationen werden auch solche Fehler innerhalb der Register erkannt, die nur bei ganz bestimmten Bitkombinationen auftreten. Der Prüfbetrieb ist zeitlich von den sonstigen Meldeeingaben und dem Prüfbetrieb für die Eingabemoduln entkoppelt.

Der Schalter S1, der vom Potential der ausgangsseitig einander parallelgeschalteten Eingabemoduln steuerbar ist, hat im wesentlichen die Funktion eines Potentialtrenners. Er setzt die am Eingang eines Eingabemoduls anstehende Meldung mit H-Potential in ein auf Low-Potential liegendes Datum um und umgekehrt.

Die Schaltmittel zum Ausgeben von Kommandos an die zu steuernden Elemente eines Prozesses sind in Figur 2 dargestellt; der Ablauf der Kommandoausgabe und die Durchführung des Prüfbetriebes sind ähnlich wie bei der Meldungseingabe. Die Ausgabe der Kommandos erfolgt über Ausgabemoduln OA1 bis OAn. Veranlaßt wird die Ausgabe vom Rechnersystem über ein erstes Register R1.2, dessen Registerstufen zur Ausgabe der Kommandos einstellbar sind.

Im nachfolgenden ist angenommen, daß ein Kommando über das Ausgabemodul OA1 ausgegeben werden soll und daß hierzu die erste Registerstufe des Registers R1.2 vom Rechnersystem her eingestellt ist. Mit dem Aufschalten von L-Potential auf den Ausgang der ersten Registerstufe wird die Sendediode des als Optokoppler ausgebildeten Ausgabemoduls OA1 erregt und der zugehörige Schalttransistor durchgesteuert. Das um die Zenerspannung einer Zenerdiode Z verminderte H-Potential einer Gleichspannungsquelle liegt dabei über die Sendediode eines zweiten Schalters S2, einen Widerstand W und die Schaltstrecke des Optokopplerschalttransistors am Ausgang A1 der Schaltung an. Über eine nicht dargestellte Zuleitung zum Kommandoempfänger hat diese Ausgangsklemme Verbindung zum L-Potential der Gleichspannungsquelle.

Soll kein Kommando an den an die Ausgangsklemme A1 angeschlossenen Kommandoempfänger übertragen werden, so wird die erste Registerstufe des ersten Registers R1.2 vom Rechner her auf H-Potential gelegt. Die Sendediode des Optokopplers bleibt dann für die Dauer der Ansteuerung der ersten Registerstufe dunkel und die Schaltstrecke im Ausgangskreis des Ausgabemoduls hochohmig.

Die Anschaltung der übrigen Ausgabemoduln geschieht in äquivalenter Weise durch Ansteuerung der jeweils zugehörigen Registerstufe durch das Rechnersystem.

Abweichend vom zyklischen Einlesen von Meldungen können bei der Kommandoausgabe gleichzeitig auch mehrere Ausgabemoduln durchgesteuert werden; dies ist durch entsprechendes Einstellen des ersten Registers R1.2 möglich.

Für die Funktionsprüfung der Ausgabemoduln ist vorgesehen, daß die Sendedioden der zugehörigen Optokoppler einzeln nacheinander vorübergehend an-, ab- oder an- und abgeschaltet werden.

Die dabei ausgelösten Statusmeldungen der Ausgabemoduln werden über den Schalter S2, eine Prüfdatenleitung DP2 und einen Prüfdatenverstärker VP2 in das Rechnersystem eingelesen. Solanae das über das erste Register R1.2 jeweils angesteuerte Ausgabemodul durchgeschaltet ist, fließt sein Strom vom Pluspol einer nicht dargestellten Gleichspannungsversorgungsquelle über die Sendediode des als Optokoppler ausgebildeten zweiten Schalters S2, einen Widerstand W, die Schaltstrecke des jeweils aktivierten Optokopplers und eine Ausgangsklemme zum jeweiligen Kommandoempfänger, der in Verbindung steht mit dem jeweils anderen Pol der Gleichspannungsversorgungsquelle; die Zenerdiode Z dient der Spannungsbegrenzung an der Sendediode des zweiten Schalters S2, der Schalter S2 der Potentialtrennung des steuernden Rechnersystems vom Prozeß. Solange einer der Ausgabemoduln durchgeschaltet ist, ist die Schaltstrecke des Optokoppler-Schalttransistors durchgesteuert und am Eingang der Prüfdatenleitung DP2 liegt L-Potential. Wird nun während des Prüfbetriebes der jeweils angeschaltete Ausgabemodul vorübergehend abgeschaltet, so wird die Schaltstrecke des Schalttransistors im zweiten Schalter hochohmig und an der Prüfdatenleitung DP2 liegt über den Widerstand W2 H-Potential. Dieses Potential oder der Wechsel dieses Potentials wird vom Rechnersystem bewertet und hieraus eine Information über das Betriebsverhalten des betreffenden Ausgabemoduls abgeleitet.

Durch diskrete Ansteuerung des Registers R1.2 ist es möglich, nur jeweils diejenigen Ausgabemoduln in einen Prüfbetrieb einzubeziehen, über die tatsächlich aktive Kommandos (H-Potential) ausgegeben werden.

Zum sicheren Erkennen des jeweils angesteuerten Ausgabemoduls ist vorgesehen, das am Ausgang der zugehörigen Registerstufe des ersten Registers R1.2 anliegende Potential in die entsprechende Registerstufe eines zweiten Registers R2.2 zu übernehmen und von dort dem Rechnersystem zur Bewertung zuzuführen. In Verbindung mit der Einhaltung vorgegebener Sicherheitsbauformabstände zwischen den Ausgabemoduln und den Zuleitungen zu den Ausgabemoduln ist das Rechnersystem in der Lage, aus den ihm über die gemeinsame Prüfdatenleitung DP2 zugeführten Daten und den vom Register R2.2 abgreifbaren Daten mit hinreichender Sicherheit zu erkennen, welchem Ausgabemodul eine bestimmte Statusmeldung zuzuordnen ist.
Auch hier lassen sich durch Ansteuerung beliebiger Bitkombinationen des ersten Registers R1.2 etwaige Fehler, die nur bei bestimmten Bitkombinationen auftreten, durch einen gesonderten Prüfbetrieb zusätzlich zur Funktionsprüfung der Ausgabemoduln offenbaren.

Anstelle gesonderter erster und zweiter Register R1.1, R1.2 und R2.1, R2.2 für die Ein- und die Ausgabemoduln können auch gemeinsame erste und zweite Register verwendet sein. Über diese Register kann zum gleichzeitigen Ein- und Ausgeben von Meldungen und Kommandos gleichzeitig auf ein Eingabe- und ein oder mehrere Ausgabemoduln und zum Prüfen dieser Moduln, abhängig davon, ob die Statusmeldungen der Moduln einem oder zwei Eingängen des Rechnersystems zugeführt werden, auf ein einziges Modul oder gleichzeitig auf ein Ein- und ein Ausgabemodul zugegriffen werden.

## Patentansprüche

1. Schaltung zum gesicherten Ein- und/oder Ausgeben binärer Daten in einen bzw. durch einen Rechner oder ein Rechnersystem, das über Ein/Ausgabemoduln in Verbindung steht mit den Prozeßelementen eines zu steuernden und/oder zu überwachenden Prozesses
und das durch kurzzeitiges Invertieren von Meldungen und Kommandos und Bewerten von dadurch bedingten Modul-Statusmeldungen diese einer Funktionsprüfung unterzieht,
**dadurch gekennzeichnet,**
- daß die Ein- und/oder die Ausgabemoduln (OE1 bis OEn, OA1 bis OAn) zum Eingeben von Meldungen und zum Ausgeben von Kommandos sowie zum Auslösen von Statusmeldungen während des Prüfbetriebes über die Registerstufen mindestens eines bedarfsweise vom Rechner oder Rechnersystem (R) einstellbaren ersten Registers (R1.1, R1.2) an-, ab- oder an- und abschaltbar sind, wobei während der Eingabe sowie mindestens während des Prüfbetriebes zur gleichen Zeit jeweils nur ein einziges oder innerhalb jeder Gruppe von Moduln (Eingabemoduln, Ausgabemoduln) jeweils nur ein einziges Modul angeschaltet sein darf,
- daß die Ausgänge des ersten Registers auf die Eingänge eines zweiten Registers (R2.1, R2.2) geführt sind, das dem Rechner oder Rechnersystem abhängig davon, ob insgesamt nur ein Modul oder innerhalb der beiden Gruppen von Moduln je ein Modul angeschaltet ist, ein oder zwei Signale zuführt, deren Wertigkeiten abhängig sind vom Potential am Ausgang der zum Anoder Abschalten dieses Moduls jeweils angesteuerten Registerstufe des ersten Registers,
- daß die Eingabemoduln auf der Ausgangsseite und/oder die Ausgabemoduln auf der Eingangsseite einander parallelgeschaltet und daß die dort jeweils anliegenden Potentiale dem Rechner oder Rechnersystem beim Ansteuern der einzelnen Ein/Ausgabemoduln sequentiell mittelbar oder unmittelbar zugeführt sind
- und daß die Zuordnung eines Potentials zu einem bestimmten Modul einer Gruppe von Moduln durch diejenige Registerstufe des zweiten Registers bestimmt ist, die vom ersten Register her beim Ansteuern eines Moduls der betreffenden Gruppe beaufschlagt ist.

2. Schaltung nach Anspruch 1, **dadurch gekennzeichnet,**
daß jedes Eingabemodul (OE1 bis OEn) einen Optokoppler aufweist, dessen Sendediode den Ausgang einer Registerstufe des ersten Registers (R1.1) mit einer Gleichstromversorgungseinrichtung und dessen Schaltstrecke ein Prozeßelement mitteloder unmittelbar mit einem gemeinsamen Rechnereingang verbindet.

3. Schaltung nach Anspruch 1, **dadurch gekennzeichnet,**
daß die Aus- bzw. Eingänge der einander parallelgeschalteten Moduln auf einen oder gruppenweise auf je einen Schalter (S1, S2) geführt sind, der durch die Statusmeldung des jeweils angeschalteten Moduls bzw. die Statusmeldung des innerhalb der betreffenden Gruppe von Moduln jeweils angeschalteten Moduls steuerbar ist und diese Statusmeldung umsetzt in ein Datum für den Rechner oder das Rechnersystem.

4. Schaltung nach Anspruch 2, **dadurch gekennzeichnet,**
daß der oder die Schalter (S1,S2) einen bzw. je einen Optokoppler aufweisen, dessen Sendediode beim Anschalten eines der zugehörigen Moduln anschaltbar ist und dessen Schaltstrecke ein aus der Statusmeldung dieses Moduls abgeleitetes Datum an den Rechner oder das Rechnersystem anlegt.

5. Schaltung nach Anspruch 4, **dadurch gekennzeichnet,**
daß der eine Anschluß der Sendediode des den Eingabemoduln (OE1 bis OEn) zugeordneten Schalters (S1) auf Bezugspotential und der andere über die Schaltstrecke des jeweils angesteuerten Moduls am Arbeitspotential einer an den Prozeßelementen auf die Zuleitungen zu den Moduln angelegten Gleichspannung liegt oder umgekehrt.

6. Schaltung nach Anspruch 4, **dadurch gekennzeichnet,**
daß der eine Anschluß der Sendediode des den Ausgabemoduln (OA1 bis OAn) zugeordneten Schalters (S2) am Arbeitspotential (+) einer Gleichspannung und der andere über die Schaltstrecke des jeweils angesteuerten Moduls und die Zuleitungen zu den Prozeßelementen am Bezugspotential dieser Gleichspannung liegt oder umgekehrt.

7. Schaltung nach Anspruch 6, **dadurch gekennzeichnet,**
daß der Sendediode des Schalters (S2) ein Widerstand (W) in Reihe geschaltet ist und daß dieser Reihenschaltung aus Sendediode und Widerstand eine Zenerdiode (Z) parallelgeschaltet ist.

8. Schaltung nach den Ansprüchen 1 oder 2, **dadurch gekennzeichnet,**
das an die Ausgänge der Eingabemoduln (OE1 bis OEn) oder an den diesen Moduln zugeordneten Schalter (S1) eine Datenleitung (D1) angeschlossen ist, über die das Einlesen der Eingaben in den Rechner oder das Rechnersystem erfolgt, und daß diese Datenleitung Mittel (RC) zum Entprellen der Eingaben aufweist.

9. Schaltung nach den Ansprüchen 1 oder 2, **dadurch gekennzeichnet,**
daß an die gruppenweise einander parallelgeschalteten Ein- und Ausgänge der Moduln oder an die Schalter (S1, S2) eine oder je eine weitere Datenleitung (DP1, DP2) angeschlossen ist, über die das Einlesen der im Prüfbetrieb veranlaßten Statusmeldungen der Moduln oder der daraus abgeleiteten Daten in den Rechner oder das Rechnersysstem erfolgt.

10. Schaltung nach Anspruch 1, **dadurch gekennzeichnet,**
daß ein weiterer Prüfbetrieb vorgesehen ist, bei dem durch den Rechner oder das Rechnersystem am ersten Register jede beliebige Bitkombination einstellbar und über das zweite Register in den Rechner oder das Rechnersystem wieder einlesbar ist.

11. Schaltung nach Anspruch 1, **dadurch gekennzeichnet,**
daß der Rechner oder das Rechnersystem (R) zur Funktionsprüfung von Ein- und/oder Ausgabemoduln über das erste Register (R1.1) nur diejenigen Moduln ansteuert, die in einem vorangehenden Melde- und/oder Kommandozyklus ausgangsseitig H-Potential geführt haben.

12. Schaltung nach Anspruch 1, **dadurch gekennzeichnet,**
daß der Rechner oder das Rechnersystem zur Funktionsprüfung der Eingabemoduln diese eingangsseitig an H-Potential legt.

## Claims

1. A circuit for the secure input and/or output of binary data into and/or by a computer or computer system which is connected via input/output modules to the process elements of a process to be controlled and/or monitored and which, by the temporary inversion of messages and commands and the evaluation of thereby triggered module status messages, subjects said modules to a function test, characterised in that
- the input- and/or output modules (OE1 to OEn, OA1 to OAn) for the input of messages and for the output of commands and for the triggering of status messages during the test operation can be switched on, switched off, or switched on and off via the register stages at least of a first register (R1.1, R1.2) which can be set up as required by the computer or computer system (R), where during the input and at least during the test operation at the same time in each case only one single module or within each group of modules (input modules, output modules) in each case only one single module is to be connected,
- that the outputs of the first register lead to the inputs of a second register (R2.1, R2.2) which supplies one or two signals to the computer or computer system irrespectively of whether a total of only one module or within the two groups of modules in each case one module is connected, where the values of said signals are dependent upon the potential at the output of that register stage of the first register in each case activated for the switching on, the switching off, or the switching on and off of this module, - that the input modules on the output side and/or the output modules on the input side are connected in parallel with one another and that the potentials applied here are sequentially indirectly or directly supplied to the computer or computer system on the actuation of the individual input/output modules,
- and that the assignment of a potential to a specific module of a group of modules is determined by that register stage of the second register which is acted upon by the first register on the actuation of a module of the respective group.

2. A circuit as claimed in Claim 1, characterised in that each input module (OE1 to OEn) comprises an optocoupler, the transmitting diode of which connects the output of a register stage of the first register (R1.1) to a d.c. supply device and the switching path of which connects a process element indirectly or directly to a common computer input.

3. A circuit as claimed in Claim 1, characterised in that the outputs and inputs of the modules connected in parallel with one another lead to a switch, or in groups in each case lead to a respective switch (S1, S2) which respectively can be controlled by the status message of the respective connected module and by the status message of that module within the respective group of modules which is in each case connected, and which converts this status message into an item of data for the computer or computer system.

4. A circuit as claimed in Claim 2, characterised in that the switch or switches (S1, S2) comprise an optocoupler or in each case comprise a respective optocoupler, the transmitting diode of which can be switched on when one of the associated modules is connected and the switching path of which applies an item of data, derived from the status message of this module, to the computer or computer system.

5. A circuit as claimed in Claim 4, characterised in that one terminal of the transmitting diode of the switch (S1) assigned to the input modules (OE1 to OEn) is connected to reference potential, and the other terminal is connected via the switching path of the respective actuated module to the operating potential of a d.c. voltage connected to the process elements on the supply lines to the modules or vice versa.

6. A circuit as claimed in Claim 4, characterised in that one terminal of the transmitting diode of the switch (S2) assigned to the output modules (OA1 to OAn) is connected to the operating potential (+) of a d.c. voltage and the other terminal is connected to the reference potential of this d.c. voltage via the switching path of the respective actuated module and the supply lines to the process elements, or vice versa.

7. A circuit as claimed in Claim 6, characterised in that a resistor (W) is connected in series with the transmitting diode of the switch (S2), and that this series arrangement of transmitting diode and resistor is connected in parallel with a zener diode (Z).

8. A circuit as claimed in Claims 1 or 2, characterised in that a data line (D1), via which the input items are read into the computer or computer system, is connected to the outputs of the input modules (OE1 to OEn) or to the switch (S1) assigned to these modules, and that this data line comprises means (RC) for the debouncing of the input items.

9. A circuit as claimed in Claims 1 or 2, characterised in that to the inputs and outputs of the modules connected in parallel with one another in groups or to the switches (S1, S2) there is connected a further data line or in each case a respective further data line (DP1, DP2) via which the input into the computer or computer system of the status messages of the modules produced during the test operation or of the data items derived therefrom takes place.

10. A circuit as claimed in Claim 1, characterised in that a further test operation is provided wherein by means of the computer or computer system any desired bit combination can be set up in the first register and via the second register can be read back into the computer or computer system.

11. A circuit as claimed in Claim 1, characterised in that for the function testing of input and/or output modules via the first register (R1.1) the computer or computer system (R) actuates only those modules which in a preceding message- and/or command cycle have carried H potential at the output end.

12. A circuit as claimed in Claim 1, characterised in that for the function testing of the input modules, the computer or computer system connects said input modules to H potential at the input end.

## Revendications

1. Circuit pour l'entrée et/ou la sortie protégée de données binaires dans ou par un calculateur ou par un système de calculateurs, et
qui est relié par l'intermédiaire de modules d'entrée/sortie aux éléments d'un processus à commander et/ou à contrôler, et qui, au moyen d'une inversion de brève durée de signalisations et d'ordres et de l'évaluation de signalisations d'état de modules, conditionnée de ce fait, soumet ces signalisations à un contrôle de fonctionnement,
caractérisé par le fait
- que les modules d'entrée et/ou les modules de sortie (OE1 à OEn, OA1 à OAn) pour l'introduction de signalisations et la délivrance de commandes ainsi que pour le déclenchement de signalisations d'état pendant le fonctionnement de contrôle peuvent être connectés, déconnectés ou connectés et déconnectés par l'intermédiaire des étages d'au moins un premier registre (R1.1, R1.2), pouvant être réglés le cas échéant par le calculateur ou le système de calculateurs (R), auquel cas pendant l'entrée ainsi qu'au moins pendant le fonctionnement de contrôle, au même instant respectivement un seul module ou, à l'intérieur de chaque groupe de modules (modules d'entrée, modules de sortie), respectivement un seul module peut être connecté,
- que les sorties du premier registre sont raccordées aux entrées d'un second registre (R2.1, R2.2), qui envoie au calculateur ou au système de calculateurs, indépendamment du fait que globalement seul un module ou, à l'intérieur des deux groupes de modules, respectivement un module est connecté, un ou deux signaux, dont les poids dépendent du potentiel présent à la sortie de l'étage du premier registre, respectivement commandé pour la connexion ou la déconnexion de ce module,
- que les modules d'entrée sont branchés en parallèle entre eux sur le côté sortie et/ou que les modules de sortie sont branchés en parallèle entre eux sur le côté entrée, et que les potentiels, qui sont respectivement appliqués à ces modules, sont envoyés séquentiellement directement ou indirectement au calculateur ou au système de calculateurs lors de la commande des différents modules d'entrée/sortie, et
que l'association d'un potentiel à un module déterminé d'un groupe de modules est déterminée par l'étage du second registre, qui est chargé à partir du premier registre, lors de la commande d'un module du groupe considéré.

2. Circuit suivant la revendication 1, caractérisé par le fait que chaque module d'entrée (OE1 à OEn) possède un optocoupleur, dont la diode émissive relie la sortie d'un étage du premier registre (R1.1) à un dispositif d'alimentation en courant continu et dont la section de commutation relie un élément de processus directement ou indirectement à une entrée commune du calculateur.

3. Circuit suivant la revendication 1, caractérisé par le fait que les entrées ou les sorties des modules branchés en parallèle entre eux sont raccordées à un interrupteur ou, par groupe, à respectivement un interrupteur (S1,S2), qui peut être commandé par la signalisation d'état du module respectivement connecté ou par la signalisation d'état du module respectivement connecté à l'intérieur du groupe considéré de modules, et convertit cette signalisation d'état en une donnée pour le calculateur ou le système de calculateurs.

4. Circuit suivant la revendication 2, caractérisé par le fait que le ou les interrupteurs (S1,S2) possèdent un optocoupleur ou respectivement un optocoupleur, dont la diode émissive peut être raccordée lors de la connexion de l'un des modules associées et dont la section de commutation applique une donnée, qui est dérivée de la signalisation d'état de ce module, au calculateur ou au système de calculateurs.

5. Circuit suivant la revendication 4, caractérisé par le fait qu'une borne de la diode émissive de l'interrupteur (S1), qui est associé aux modules d'entrée (OE1 à OEn), est reliée au potentiel de référence et l'autre borne de la diode est reliée, par l'intermédiaire de la section de commutation du module respectivement commandé, au potentiel de travail d'une tension continue appliquée, au niveau des éléments de processus, aux lignes d'alimentation aboutissant aux modules, ou inversement.

6. Circuit suivant la revendication 4, caractérisé par le fait qu'une borne de la diode émissive de l'interrupteur (S2), qui est associé aux modules de sortie (OA1 à OAn), est reliée au potentiel de travail (+) d'une tension continue et l'autre borne de la diode est reliée, par l'intermédiaire de la section de commutation du module respectivement commandé et des lignes d'alimentation aboutissant aux éléments de processus, au potentiel de référence de cette tension continue ou inversement.

7. Circuit suivant la revendication 6, caractérisé par le fait qu' une résistance (W) est branchée en série avec la diode émissive de l'interrupteur (S2) et qu'une diode Zener (Z) est branchée en parallèle avec ce circuit série formé d'une diode émissive et d'une résistance.

8. Circuit suivant les revendications 1 ou 2, caractérisé par le fait qu'aux entrées des modules d'entrée (OE1 à OEn) ou à l'interrupteur (S1) associé à ces modules est raccordée une ligne de transmission de données (D1), par l'intermédiaire de laquelle s'effectue l'insertion des entrées dans le calculateur ou le système de calculateurs, et que cette ligne de transmission de données comporte des moyens (RC) pour supprimer le battement des entrées.

9. Circuit suivant les revendications 1 ou 2, caractérisé par le fait qu'aux entrées et sorties des modules, qui sont branchées en parallèle entre elles par groupes, ou aux interrupteurs (S1,S2) est connectée une ligne de transmission de données ou respectivement une autre ligne de transmission de données (DP1, DP2), au moyen de laquelle s'effectue l'introduction des signalisations d'état, déclenchées dans le fonctionnement de contrôle des modules ou des données, qui en sont dérivées, dans le calculateur ou dans le système de calculateurs.

10. Circuit suivant la revendication 1, caractérisé par le fait qu'il est prévu un fonctionnement de contrôle supplémentaire, lors duquel chaque combinaison quelconque de bits peut être réglée au moyen du calculateur ou du système de calculateurs, dans le premier registre et peut être introduite à nouveau, par l'intermédiaire du second registre, dans le calculateur ou dans le système de calculateurs.

11. Circuit suivant la revendication 1, caractérisé par le fait que le calculateur ou le système de calculateurs (R) commande, pour le contrôle du fonctionnement de modules d'entrée et/ou de modules de sortie, par l'intermédiaire du premier registre (R1.1) uniquement les modules, qui, lors d'un cycle précédent de signalisation et/ou de commande, ont appliqué un potentiel H, côté sortie.

12. Circuit suivant la revendication 1, caractérisé par le fait que pour le contrôle du fonctionnement des modules d'entrée, le calculateur ou le système de calculateurs applique un potentiel H au côté entrée de ces modules.
